# EUROPÄISCHE PATENTSCHRIFT

(11) **EP 2 713 099 B1**
(45) Veröffentlichungstag und Bekanntmachung des Hinweises auf die Patenterteilung: **14.09.2016**
(21) Anmeldenummer: 13185787.2
(22) Anmeldetag: 24.09.2013
(51) Int. Cl.: F21V 15/01, F21V 31/00, B29C 47/06, F21V 17/16

(54) **Bauteil für eine Leuchte**
Component for a lighting device
Composant pour un lampadaire

(30) Priorität: 28.09.2012 DE 102012109265
(43) Veröffentlichungstag der Anmeldung: 02.04.2014
(73) Patentinhaber: Elkamet Kunststofftechnik GmbH, 35216 Biedenkopf (DE)
(72) Erfinder: Wewior, Markus, 35216 Biedenkopf (DE); Ortmüller, Michael, 35232 Dautphetal-Herzhausen (DE)
(74) Vertreter: Keil & Schaafhausen Patent- und Rechtsanwälte PartGmbB

(56) Entgegenhaltungen:
- DE-A1- 4 016 528
- JP-B2- 4 859 160
- US-A1- 2005 201 091
- US-A1- 2007 008 717

## Beschreibung

Die Erfindung betrifft ein Bauteil für eine Leuchte gemäß dem Oberbegriff von Anspruch 1, eine Leuchte gemäß Anspruch 9 sowie ein Verfahren zum Herstellen eines Bauteils gemäß Anspruch 10.

Eine Leuchte besitzt gewöhnlich mehrere Bauteile, namentlich ein Leuchtengehäuse und eine meist transparente oder transluzente Leuchtenabdeckung. In dem Leuchtengehäuse sind wenigstens ein Leuchtmittel sowie Einrichtungen für die elektrische Stromversorgung untergebracht. Das Leuchtengehäuse hat eine Lichtaustrittsöffnung, die von der Leuchtenabdeckung verschlossen ist.

In Abhängigkeit von den Umgebungsbedingungen der Leuchte kann es notwendig sein, die Leuchtmittel sowie die Strom und Spannung führenden elektrischen Anschlüsse bzw. Einrichtungen vor Feuchtigkeit zu schützen. Zudem ist es oft notwendig oder gewünscht, das Eindringen von Verunreinigungen und Insekten in den Innenraum der Leuchte zu verhindern. Staub und Schmutz können sich ansonsten auf dem Leuchtmittel, der transparenten oder transluzenten Leuchtenabdeckung oder auf gegebenenfalls vorhandenen Linsen, Reflektoren, Refraktoren oder anderen lichttechnischen Komponenten ablagern und so die Effizienz der Leuchte insgesamt beeinträchtigen.

Aus diesem Grund wurden Leuchten entwickelt, die zwischen dem Leuchtengehäuse und der Leuchtenabdeckung eine oder mehrere Dichtungen aufweisen, die eine Abdichtung zwischen diesen beiden Bauteilen der Leuchte bewirken.

Aus DE 20015359 U1 ist beispielweise eine Leuchte bekannt, die eine in eine Nut des Leuchtengehäuses eingesetzte extrudierte Dichtung vorsieht, die mit einer Leuchtenabdeckung zusammenwirkt.

DE 19814383 A1 offenbart eine Feuchtraumleuchte mit einem Gehäuse und einer Leuchtenabdeckung, die mittels Halteelementen lösbar an dem Gehäuse festgelegt ist. Auch hier wird eine Dichtung in eine Nut des Leuchtengehäuses eingesetzt, wobei die Leuchtenabdeckung mit ihrem oberen Rand gegen die Dichtung gepresst wird.

Aus DE 3544306 A1 ist eine Leuchte bekannt, bei der eine zwischen dem Leuchtengehäuse und der Leuchtenabdeckung vorgesehene Dichtung an der Leuchtenabdeckung befestigt ist. Die Dichtung besitzt einen sichelartigen Querschnitt und wird als getrennt gefertigtes Bauteil mit dem Rand der Leuchtenabdeckung verklebt oder verschweißt. Man kann die Dichtung aber auch am Rand der Leuchtenabdeckung aufschäumen, so dass für die Herstellung und die Befestigung der Dichtung nur ein Arbeitsgang notwendig ist.

DE 102009016566 A1 offenbart eine Leuchte mit einer an der Leuchtenabdeckung oder dem Leuchtengehäuse fixierten Dichtlippe, wobei die Fixierung insbesondere durch eine Zweikomponenten-Spritztechnologie erfolgen soll.

US 2005/0201091 A1 beschreibt ein Bauteil nach dem Oberbegriff des Anspruchs 1. Eine biegsame Oberflächenleuchte mit einem austauschbaren LEDModul weist mehrere weichere Randteilen und ein steiferes Grundmodul mit einem Kanal für elektrische Leitungen und Beleuchtung auf. Das Grundmodul ist aus Polyvinylchlorid (PVC) extrudiert und umfasst einen Kanal. An bezüglich des Kanals gegenüberliegenden Seiten ist das Grundmodul mit einem ersten extrudierten Randteil und einem zweiten extrudierten Randteil aus PVC verbunden. Das Grundteil kann gemeinsam mit dem ersten und zweiten extrudierten Randteil und Anlagepuffern für eine Linse co-extrudiert werden.

Ein Belichtungs- und Belüftungselement in Form einer Lichtkuppel ist aus DE 40 16 528 A1 bekannt. Es besteht aus einer äußeren, lichtdurchlässigen Kunststoffschale, einer inneren, lichtdurchlässigen Kunststoffschale gleicher Formgebung wie die äußere Kunststoffschale, einem Distanzprofil zwischen den im Wesentlichen planen Auflagerändern der beiden Kunststoffschalen und einem Hohlprofil-Aufstellrahmen. Dieser Hohlprofil-Aufstellrahmen hat in seinem die Kunststoffschalen umgreifenden Bereich im Wesentlichen einen C-förmigen Querschnitt, wobei der obere und untere Schenkel jeweils als Hohlprofil ausgebildet sind. An den oberen Schenkel sind durch Co-Extrusion Dichtlippen einstückig angeformt.

US 2007/0008717 A1 offenbart eine extrudierte Beleuchtungsanordnung, die als Poller- oder Wegbeleuchtung genutzt werden kann. Die Beleuchtungsanordnung weist einen Halter und eine Leuchte auf. Der Halter weist mindestens eine Aussparung in seiner Wand auf, die sich zumindest über einen Teil der Länge des Halters erstreckt. Die Leuchte ist in den Halter eingebaut, sodass zumindest ein Teil der Leuchte in der Aussparung in der Wand des Halters positioniert ist. Der Halter kann ein extrudiertes Bauteil umfassen, wobei die Aussparung in der Wand des Halters während des Extrusionsprozesses geformt wird.

Allgemein bekannt sind auch Leuchtengehäuse oder Leuchtenabdeckungen mit Dichtungen aus Schaumstoff, Moosgummi o.dgl., die - z.B. mit doppelseitigem Klebeband - auf den Bauteilen der Leuchte aufgeklebt sind.

Die bekannten Abdichtungs-Lösungen haben den Nachteil, dass die zwischen den Bauteilen der Leuchte vorgesehenen Dichtungen separat hergestellt und anschließend mit manuellem oder apparativem Aufwand am Leuchtengehäuse oder an der Leuchtenabdeckung befestigt werden müssen, sei es, dass die Dichtung in eine Nut eingelegt oder auf einem Flächenbereich aufgeklebt werden muss.

Mithin sind stets separate Bauteile sowie zusätzliche Arbeitsschritte zur Herstellung und zum Einbringen bzw. Befestigen einer Dichtung an einem Bauteil der Leuchte erforderlich. Je nach Gestalt und konstruktiver Auslegung des Leuchtenbauteils, an dem die Dichtung angebracht werden soll, ist zudem oft ein beträchtlicher Aufwand erforderlich, um die zu fixierende Dichtung auf ihrer gesamten Länge tatsächlich auch so korrekt auf dem Bauteil zu positionieren, dass sie in der fertigen Leuchte ihren Zweck zuverlässig erfüllen kann. Dies ist insbesondere dann der Fall, wenn die Dichtung nicht in einer Nut oder Vertiefung angeordnet ist, sondern auf einer größeren Fläche des Leuchtenbauteils verläuft, die nur wenige oder gar keine Anhaltspunkte zur korrekten Positionierung der Dichtung gibt.

Andere Lösungen benötigen aufwendige Spritzgießvorrichtungen oder verwenden Aufschäumverfahren, um die Dichtung an dem jeweiligen Bauteil auszubilden, was sich jedoch ungünstig auf die Herstellkosten der Leuchte auswirkt. Zudem setzt das Anbringen einer Dichtung mittels Spritztechnologie Verträglichkeit und gute Haftung zwischen dem Werkstoff des Leuchtenbauteils und dem Werkstoff der Dichtung voraus. Dies ist allerdings nicht immer gegeben, wodurch die Auswahl der möglichen Werkstoffkombinationen stark eingeschränkt wird.

Ziel der Erfindung ist es, diese und weitere Nachteile des Standes der Technik zu vermeiden und ein Bauteil für eine Leuchte zu schaffen, das mit einfachen Mitteln kostengünstig herstellbar ist und das mit einer für die Abdichtung gegenüber einem anderen Bauteil der Leuchte geeigneten Dichtung versehen ist. Letztere soll über ihre gesamte Länge und Ausdehnung eine dauerhafte und zuverlässige Dichtwirkung zwischen den Bauteilen ermöglichen, ohne dass zusätzliche oder separate Fertigungs- oder Montageschritte notwendig sind. Angestrebt wird ferner eine größere Auswahl an möglichen Werkstoffen und Werkstoffkombinationen, die für das Bauteil und die Dichtung verwendet werden können.

Die Aufgabe wird mit der Erfindung durch die Merkmale der Ansprüche 1, 9 und 10 gelöst. Ausgestaltungen sind Gegenstand der Unteransprüche.

Bei einem Bauteil für eine aus mehreren Bauteilen bestehende Leuchte, wobei das Bauteil mit wenigstens einem anderen Bauteil der Leuchte verbindbar ist, mit einem Bauteilkörper, der eine Längsrichtung aufweist, und mit wenigstens einer an dem Bauteilkörper ausgebildeten Dichtung, wobei sich die wenigstens eine Dichtung in Längsrichtung des Bauteilkörpers erstreckt, sieht die Erfindung vor, dass der Bauteilkörper und die Dichtung gemeinsam ein Extrusionsprofil bilden, das im Co-Extrusionsverfahren hergestellt ist, mithin durch gleichzeitige und gemeinsame Extrusion von zwei oder mehr Materialien in einem Werkzeug. Dadurch ist es auf überraschend einfache Weise möglich, die Herstellung eines Bauteils, die Fertigung eines für die Abdichtung gegenüber einem anderen Bauteil vorgesehene Dichtung und die Montage der Dichtung an dem Bauteil in nur einem einzigen Arbeitsschritt auszuführen. Insbesondere für das Anbringen bzw. Befestigen der Dichtung sind keine zusätzlichen oder separaten Arbeitsschritte oder Werkzeuge mehr notwendig, was sich äußerst günstig auf die Herstellkosten auswirkt. Die Dichtung wird vielmehr in nur einem Herstellprozess zusammen mit dem Bauteilkörper als dessen integraler Bestandteil ausgebildet. Das Co-Extrusionsverfahren lässt sich mit einfachen Mitteln kostengünstig ausführen und ist auch bei Verwendung unterschiedlicher Materialien optimal beherrschbar.

Ein weiterer wichtiger Vorteil der Erfindung besteht darin, dass die Dichtung nicht mehr nachträglich in eine dafür vorgesehene Nut eingebracht oder auf eine dafür vorgesehene Fläche des Bauteilkörpers aufgebracht werden muss. Die Dichtung wird vielmehr unmittelbar mit dem Bauteil verbunden bzw. integriert und dabei präzise positioniert, selbst wenn die Dichtung auf einer Oberfläche des Bauteilkörpers aufgebracht werden sollte. Die im Stand der Technik erforderlichen separaten Schritte für die Herstellung der Dichtung und deren Montage fallen ersatzlos weg, desgleichen die damit verbundenen Prozesszeiten und Kosten. Darüber hinaus ist die Dichtung stets korrekt und mit engen Toleranzen an dem Bauteilkörper positioniert, so dass eine dauerhafte und zuverlässige Dichtwirkung gewährleistet werden kann. Durch die Reduzierung der separat zu handhabenden Einzelteile ergeben sich weitere Vorteile aus Entlastungen hinsichtlich Disposition und Lagerhaltung der einzelnen Komponenten. Auch Logistik und Transport werden vereinfacht.

Eine Ausgestaltung der Erfindung sieht vor, dass der Bauteilkörper und die Dichtung kraftschlüssig, reibschlüssig, formschlüssig und/oder stoffschlüssig miteinander verbunden sind. Bei jeder dieser Verbindungsarten ist die Dichtung stets fest mit dem Bauteilkörper verbunden, welcher ungehindert an der Leuchte montiert und bei Bedarf wieder demontiert werden kann, ohne dass die Gefahr besteht, dass sich die Dichtung von dem Bauteilkörper löst oder sich verschiebt. Je nach Ausgestaltung von Bauteilkörper und Dichtung können die genannten Verbindungsarten einzeln verwendet, aber auch miteinander kombiniert werden, beispielsweise durch eine kraft- und formschlüssige oder durch eine form- und stoffschlüssige Verbindung. Wichtig ist hierbei stets, dass die Verbindung zwischen dem Bauteil und der Dichtung im Co-Extrusionsverfahren erfolgt, d.h. während der Herstellung des Bauteils und der Dichtung.

Eine im Co-Extrusionsverfahren erzeugte kraft-, reib- und/oder formschlüssige Verbindung zwischen Bauteilkörper und Dichtung gestattet eine nahezu freie Auswahl an Materialien für den Bauteilkörper und die Dichtung. Vor allem sind bedingt durch das Co-Extrusionsverfahren in Verbindung mit einer kraft-, reib- und/oder formschlüssigen Verbindung zwischen Bauteil und Dichtung auch solche Werkstoffkombinationen möglich, die aufgrund fehlender Verträglichkeit oder Haftung nicht in stoffschlüssige Verbindung miteinander gebracht werden können. Je nach Einsatzzweck der Leuchte lassen sich damit in Bezug auf die physikalischen Eigenschaften des Bauteils (z.B. Stabilität, Lichtdurchlässigkeit u.dgl.) und die Dichtwirkung (Härte, Elastizität u.dgl.) optimale Werkstoffkombinationen bilden, die mit herkömmlichen Herstellverfahren nicht realisierbar wären.

Gemäß einer weiteren Ausgestaltung der Erfindung weist die Dichtung entlang der Längsrichtung im Querschnitt einen ersten Abschnitt und einen zweiten Abschnitt aufweist, wobei der erste Abschnitt zur Anbindung der Dichtung an den Bauteilkörper vorgesehen ist, während der zweite Abschnitt zur Abdichtung des Bauteils gegenüber einem anderen Bauteil der Leuchte vorgesehen ist und eine Dichtfläche aufweist. Zum einen ist dadurch eine stets optimale Dichtwirkung gegenüber dem anderen Bauteil gewährleistet. Zum anderen ist die Dichtung stets dauerhaft und zuverlässig mit dem Bauteilkörper verbunden, ohne dass zusätzliche oder separate Arbeitsschritte notwendig sind.

Eine weitere wichtige Ausgestaltung der Erfindung sieht vor, dass der erste Abschnitt der Dichtung entlang der Längsrichtung in einer Ausnehmung des Bauteilkörpers angeordnet ist. Dies ermöglicht nicht nur die Realisierung einer dauerhaft festen Verbindung zwischen dem meist stabileren Bauteilkörper und der gewöhnlich weichelastischen Dichtung. Letztere wird vielmehr durch das Co-Extrusionsverfahren zum integralen Bestandteil des Bauteils, wobei die Dichtung ohne jeden zusätzlichen Arbeitsschritt in das Bauteil eingearbeitet ist und sich nicht mehr davon lösen kann.

Dazu trägt auch die vorteilhafte Weiterbildung der Erfindung bei, wonach die Ausnehmung des Bauteilkörpers entlang der Längsrichtung im Querschnitt mit einem Hinterschnitt und der erste Abschnitt der Dichtung mit einem dazu korrespondierenden Querschnitt versehen sind. Bauteil und Dichtung bilden damit ein einheitliches und präzise gefertigtes Extrusionsprofil, das als Verbundteil mit sehr engen Toleranzfehlern produzierbar ist. Eine solche Ausgestaltung von Bauteil und Dichtung ist mit den aus dem Stand der Technik bekannten Maßnahmen und Verfahren nicht oder nur mit erheblichem technischen und finanziellen Aufwand realisierbar, denn allein das nachträgliche Einsetzen einer im Querschnitt profilierten Dichtung in eine Ausnehmung, die mit einem Hinterschnitt versehen ist, lässt sich nur schwer bis gar nicht realisieren. Mit Vorteil kann demgegenüber die Erfindung sogar einen relativ großen Hinterschnitt wählen, was sich äußerst günstig auf die Festigkeit der Verbindung zwischen dem Bauteilkörper und der Dichtung auswirkt.

Die Dichtung kann - soweit dies gewünscht oder notwendig ist - auch auf einem Oberflächenabschnitt des Bauteilkörpers aufgebracht sein. Auch hierbei werden der Bauteilkörper und die Dichtung gemeinsam im Co-Extrusionsverfahren als Verbundkörper hergestellt und dauerhaft fest miteinander verbunden, vorzugsweise durch eine stoffschlüssige Verbindung. Damit ist gewährleistet, dass die Dichtung stets dauerhaft und zuverlässig mit dem Bauteilkörper verbunden ist, ohne dass zusätzliche oder separate Arbeitsschritte notwendig sind. Zudem lässt sich die Dichtung relativ zum Bauteilkörper entlang der Längsrichtung äußerst präzise positionieren, was die Dichtwirkung günstig beeinflusst.

Die Dichtung ist zumindest teilweise massiv ausgebildet. Sie kann aber auch ergänzend oder alternativ zumindest teilweise hohl ausgebildet sein. Dadurch sind -je nach Einsatzzweck der Leuchte und in Abhängigkeit von den geometrischen Verhältnissen zwischen den Bauteilen - verschiedenste Ausbildungen der Dichtung möglich. Beispielsweise lässt sich diese entlang der Längsrichtung des Bauteilkörpers und im Querschnitt vollständig massiv ausbilden. Möglich ist auch eine massive Ausbildung des ersten Abschnitts der Dichtung, der in die Längsausnehmung des Bauteilkörpers einextrudiert ist, währen der zweite Abschnitt der Dichtung für eine optimale Dichtwirkung entlang der Längsrichtung des Bauteilkörpers durchgehend oder abschnittsweise hohl ausgebildet ist.

Man kann die Dichtung aber auch zumindest teilweise geschäumt ausbilden, wenn dies aufgrund der Dichtungsanforderungen notwendig oder zweckmäßig ist. Denkbar ist auch, die Dichtung teilweise mit einer zusätzlichen Beschichtung, z.B. einer Beflockung, zu versehen, beispielsweise um die Dichtwirkung gegenüber einem anderen Bauteil weiter zu verbessern oder um den Fügevorgang beim Montieren und Demontieren des Bauteils an der Leuchte zu erleichtern.

Während der erste (Querschnitts-)Abschnitt der Dichtung bevorzugt in der Ausnehmung des Bauteilkörpers sitzt oder auf diesem flächig aufgebracht ist, ist der zweite Abschnitt der Dichtung als Dichtabschnitt entlang der Längsrichtung im Querschnitt rund, oval, dreieckig, viereckig, schwalbenschwanz¬förmig, pilzförmig, tannenbaumförmig, C-förmig, sichelförmig o.dgl. ausgebildet. Dadurch lassen sich die unterschiedlichsten Abdichtungsanforderungen erfüllen.

Um das Bauteil mit einem anderen Bauteil der Leuchte verbinden zu können, sieht die Erfindung weiter vor, dass der Bauteilkörper entlang der Längsrichtung zur Festlegung an dem anderen Bauteil mit einem Rast- oder Befestigungselement versehen ist. Auf diese Weise lässt sich das Bauteil nicht nur rasch und bequem montieren. Es kann ebenso bei Bedarf wieder demontiert werden, beispielsweise wenn ein Leuchtmittel der Leuchte ausgetauscht werden muss.

Konstruktiv ist es günstig, wenn das Rast- oder Befestigungselement von der Dichtung gebildet ist oder wenn das Rast- oder Befestigungselement die Dichtung trägt. Eine solche Dichtung bildet dabei entweder selbst ein Rastelement, das in montierter Position des Bauteils in eine korrespondierende Rastausnehmung an dem anderen Bauteil eingreift und dabei gleichzeitig die Verbindung abdichtet. Alternativ ist es möglich, dass die Dichtung selbst eine Rastausnehmung aufweist oder bildet, in die ein Rastelement eingreift, welches an dem anderen Bauteil ausgebildet ist. Auch hierbei erfüllt die Dichtung zwei Funktionen, nämlich eine Rast- und eine Dichtfunktion. Eine weitere Alternative sieht vor, dass ein Rast- oder Befestigungselement die Dichtung trägt, d.h. die kraft- und/oder formschlüssige Verbindung zwischen den Bauteilen wird von Rast- bzw. Befestigungselementen vorgenommen, die an den miteinander zu verbindenden Bauteilen ausgebildet. Eines der Rast- oder Befestigungselement trägt die Dichtung, welche die Verbindung gegenüber dem anderen Rast- oder Befestigungselement abdichtet. Auch dadurch sind die Bauteile in montierter Stellung stets zuverlässig und dicht miteinander verbunden. Die Leuchte ist zuverlässig gegen das Eindringen von Verunreinigungen geschützt.

Der Bauteilkörper und die Dichtung sind bevorzugt aus unterschiedlichen Materialien gefertigt. Auf diese Weise ist es möglich, sowohl für den Bauteilkörper als auch für die Dichtung das für den gewünschten Einsatzzweck der Leuchte jeweils optimale Material auszuwählen.

Eine noch andere Ausführungsform der Erfindung sieht vor, dass der Bauteilkörper und/oder die Dichtung jeweils aus zwei oder mehr verschiedenen Materialien gefertigt sind. Damit kann beispielsweise der Bauteilköper, wenn er als Leuchtenabdeckung ausgebildet ist, aus unterschiedlich lichtdurchlässigen Materialien gefertigt werden. Bildet der Bauteilkörper ein Leuchtengehäuse, so können unterschiedlich stabile, aber auch unterschiedlich lichtdurchlässige Materialien kombiniert werden, um auf diese Weise die Leuchte den jeweiligen Anforderungen entsprechend zu gestalten. Dabei werden die Bauteile stets im Extrusionsverfahren hergestellt, was sich einfach und kostengünstig ausführen lässt, wobei das Bauteil und die Dichtung co-extrudiert werden, so dass nur ein einziger Fertigungsschritt notwendig ist und die Dichtung unmittelbar in dem Bauteilkörper integriert ist.

Der Bauteilkörper kann mithin ein Leuchtengehäuse oder ein Teil eines Leuchtengehäuses sein. Er kann aber auch eine Leuchtenabdeckung oder einen Teil davon bilden.

Eine Leuchte mit einem Bauteil gemäß einem der vorgenannten Merkmale lässt sich aufgrund der Verwendung des Co-Extrusionsverfahrens für die gleichzeitige Herstellung von Bauteilkörper und Dichtung äußerst rationell und kostengünstig realisieren, wobei die Dichtung bevorzugt kraftschlüssig, reibschlüssig, formschlüssig und/oder stoffschlüssig in einer Längsausnehmung des Bauteilkörpers oder darauf integriert wird, ohne dass zusätzliche oder separate Montageschritte notwendig sind.

Demgemäß sieht ein Verfahren zum Herstellen eines Bauteils für eine aus mehreren Bauteilen bestehende Leuchte, wobei das Bauteil mit wenigstens einem anderen Bauteil der Leuchte verbindbar ist, mit einem Bauteilkörper, der eine Längsrichtung aufweist, und mit wenigstens einer an dem Bauteilkörper ausgebildeten Dichtung, wobei sich die wenigstens eine Dichtung in Längsrichtung des Bauteilkörpers erstreckt, erfindungsgemäß vor, dass der Bauteilkörper und die Dichtung im Co-Extrusionsverfahren hergestellt werden. Dabei werden der Bauteilkörper und die Dichtung während des Co-Extrusionsverfahrens kraftschlüssig, reibschlüssig, formschlüssig oder stoffschlüssig miteinander verbunden. Die Verbindung zwischen dem Bauteilkörper und der Dichtung kann aber auch durch Kombination der genannten Verbindungsarten erfolgen, z.B. kraft- und reibschlüssig oder stoff- und formschlüssig.

Mit dem erfindungsgemäßen Verfahren wird die Dichtung bereits während des Herstellprozesses fest mit dem Bauteilkörper verbunden, was sich äußerst günstig auf den Fertigungsaufwand und die Herstellkosten auswirkt. Zudem wird die Dichtung bereits während der Fertigung entsprechend den vorgegebenen Toleranzvorgaben und grenzen relativ zu dem Bauteil positioniert und ausgerichtet, so dass das Bauteil stets präzise an dem anderen Bauteil montiert werden kann und mit dem fertigen Bauteil optimale Dichtwirkungen erzielt werden.

Gemäß einem wichtigen Aspekt der Erfindung wird die Dichtung entlang der Längsrichtung in eine Ausnehmung des Bauteilkörpers extrudiert. Damit lässt sich eine sofort wirksame und besonders stabile Verbindung realisieren, insbesondere dann, wenn die Ausnehmung quer zur Längsrichtung mit einem Hinterschnitt versehen ist, in den die Dichtung formschlüssig einextrudiert ist.

Eine in einem Co-Extrusionsverfahren erzeugte formschlüssige Verbindung zwischen dem Bauteilkörper und der Dichtung gestattet auch die Wahl solcher Werkstoffkombinationen, die aufgrund fehlender Verträglichkeit oder Haftung nicht in stoffschlüssige Verbindung miteinander gebracht werden können.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Schnittansicht einer Leuchte mit zwei extrudierten Bauteilen;
- Fig. 2: die Bauteile der Leuchte von Fig. 1 in einer Schrägansicht;
- Fig. 3: eine Schnittansicht eines Randbereichs eines ersten Bauteils der Leuchte von Fig. 1 mit Bauteilkörper und Dichtung;
- Fig. 4: eine Schnittansicht eines Randbereichs eines anderen Bauteils für eine Leuchte mit Bauteilkörper und Dichtung;
- Fig. 5: eine Schnittansicht eines Randbereichs eines noch anderen Bauteils für eine Leuchte mit Bauteilkörper und Dichtung;
- Fig. 6.: eine Schnittansicht eines Randbereichs eines noch anderen Bauteils für eine Leuchte mit Bauteilkörper und Dichtung;
- Fig. 7: eine Schnittansicht eines Randbereichs eines weiteren Bauteils für eine Leuchte, mit Bauteilkörper und Dichtung;
- Fig. 8: eine schematische Teil-Schnittansicht einer weiteren Ausführungsform einer Leuchte mit zwei extrudierten Bauteilen; und
- Fig. 9: eine schematische Teil-Schnittansicht einer anderen Ausführungsform einer Leuchte mit zwei extrudierten Bauteilen.

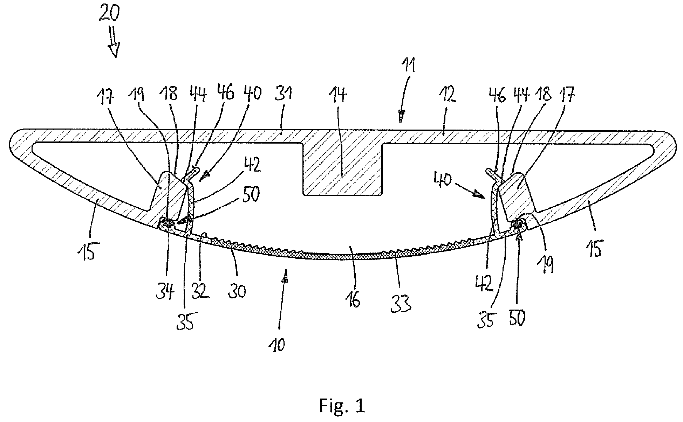

Fig. 1 zeigt schematisch eine allgemein mit 20 bezeichnete Leuchte, deren Leuchtenkörper von zwei Bauteilen 10, 11 gebildet wird. Fig. 1 zeigt insoweit nur die Bauteile 10, 11. Die übrigen Bestandteile der Leuchte wie z.B. Leuchtmittel oder elektrische Anschlüsse sind nicht dargestellt.

Das erste Bauteil 10 hat einen Bauteilkörper 30 und randseitig je eine Dichtung 50. Es bildet mit dem Bauteilkörper 30 eine Leuchtenabdeckung, die im dargestellten Beispiel - durch unterschiedliche Schraffuren angedeutet - aus zwei unterschiedlichen Materialien gefertigt ist. Der zentrale Bereich 33 des Bauteilkörpers 30 kann beispielsweise aus einem klar transparenten Material bestehen, während die beiden Randbereiche 35 beispielsweise aus transluzentem, Diffusor-Additiven versehenem oder gedeckt eingefärbtem Material gefertigt sein können. Der Bauteilkörper 30 kann auch aus nur einem Material gefertigt sein.

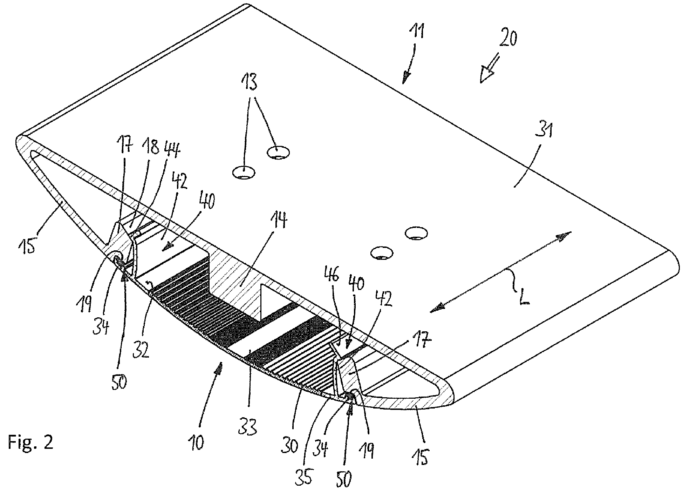

Das andere Bauteil 11 hat einen Bauteilkörper 31 und bildet mit diesem ein Leuchtengehäuse, bevorzugt aus einem lichtundurchlässigen Material. Dieses Gehäuse 31 hat eine Rückwand 12, die - wie Fig. 2 zeigt - für die Montage der Leuchte 20 an einer (nicht gezeigten) Wand oder einer Decke mit Durchgangslöchern 13 versehen ist. Die Löcher 13 können, je nach Anordnung, auch für die Durchführung von (nicht dargestellten) Stromkabeln dienen. Im Inneren des Leuchtengehäuses 11 ist ein Sockel 14 ausgebildet. An diesem werden die (nicht dargestellten) Leuchtmittel sowie für den Betrieb der Leuchte 20 notwendige (ebenfalls nicht gezeigte) elektrische Anschlüsse und/oder Schaltgeräte montiert.

Der Rückwand 12 gegenüberliegend weist der Bauteilkörper 31 eine Frontwand 15 auf, die mittig von einer Lichtaustrittsöffnung 16 unterbrochen ist. Letztere wird - wie in den Fig. 1 und 2 dargestellt - in montiertem Zustand der Leuchte 20 von dem Bauteil 10, namentlich von dem Bauteilkörper bzw. der Leuchtenabdeckung 30, verschlossen, die hierzu mit dem anderen Bauteil 11 verbindbar ist. Die dazu vorgesehenen Mittel 17, 18, 40 werden weiter unten beschrieben.

Zu beiden Seiten der Lichtaustrittsöffnung 16 weist die Frontwand 15 des Bauteils 11 Randbereiche 17 auf, die zum Inneren der Leuchte 20 hin jeweils mit einer Anlagefläche 18 und nach außen hin jeweils mit einer Stufe, die eine Stufenfläche 19 bildet, versehen sind, wobei jede Stufenfläche 19 eine Dichtfläche bildet.

Beide Bauteile 10, 11 sind Extrusionsprofile, die sich quer zu dem in Fig. 1 gezeigten Querschnitt in Längsrichtung L erstrecken (siehe dazu Fig. 2). Die Bauteile 10, 11 können dadurch in beliebiger Länge extrudiert und anschließend auf die für die jeweilige Leuchte 20 notwendige Länge zugeschnitten werden. Fig. 2 zeigt insoweit nur einen Ausschnitt der sich entlang der Längsrichtung L erstreckenden Bauteile 10, 11. Dementsprechend erstreckt sich auch die Lichtaustrittsöffnung 16 in Längsrichtung L, die senkrecht dazu von den bevorzugt parallel verlaufenden Randbereichen 17 begrenzt wird.

Um das von den Bauteilen 10, 11 gebildete Leuchtenprofil zu komplettieren und die Leuchte 20 stirnseitig abzuschließen, werden endseitig in das Bauteil 11 (nicht dargestellte) Abschlusselemente eingesetzt, die das Gehäuse dicht verschließen.

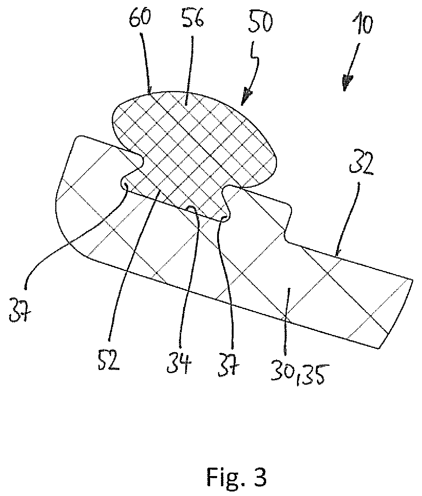

Wie Fig. 3 näher zeigt, hat jede Dichtung 50 des Bauteilkörpers 30 entlang dessen Längsrichtung L im Querschnitt einen ersten Abschnitt 52 und einen zweiten Abschnitt 56. Der erste Abschnitt 52 dient zur Festlegung der Dichtung 50 an dem Bauteilkörper 30, während der zweite Abschnitt 56 zur Abdichtung des Bauteils 10 gegenüber dem anderen Bauteil 11, namentlich dem Leuchtengehäuse, vorgesehen ist.

Der erste Abschnitt 52 der Dichtung 50 ist in der Ausführungsform von Fig. 3 im Querschnitt etwa schwalbenschwanzförmig ausgebildet. Er sitzt in einer formgleichen Ausnehmung 34, die auf einer dem Inneren der Leuchte 20 zugewandten Innenfläche 32 des Bauteils 10 ausgebildet ist. Die Ausnehmung 34 verläuft randseitig zum Bauteilkörper 30 und gleichfalls parallel zur Längsrichtung L. Sie dient der formschlüssigen Anbindung der Dichtung 50 an den Bauteilkörper 30 und ist korrespondierend zum ersten Abschnitt 52 der Dichtung 50 im Querschnitt ebenfalls schwalbenschwanzförmig ausgebildet und entsprechend seitlich mit jeweils einem Hinterschnitt 37 versehen. Der Randbereich 35 des Bauteilkörpers 30 ist in dem Bereich, wo sich die Ausnehmung 34 befindet - wie Fig. 1 zeigt - gegenüber dem zentralen Bereich 33 verstärkt ausgebildet, so dass die Innenfläche 32 zum Rand hin eine Stufe oder einen Absatz bildet.

Dadurch ist der Randbereich 35 ausreichend massiv und stabil, um die Dichtung 50 formschlüssig aufzunehmen, während die übrigen Bereiche des Bauteilkörpers 30, insbesondere der zentrale Bereich 30, in Bezug auf die gewünschte Lichtdurchlässigkeit und Lichtstreuung in der Dicke optimiert, aber auch strukturiert werden kann.

Der zweite Abschnitt 56 der Dichtung 60 ist im Querschnitt etwa oval ausgebildet. Er bildet eine Dichtfläche 60, die sich in montiertem Zustand des Bauteils 10 elastisch und dichtend an die Dichtflächen 19 der Randbereiche 17 des Bauteils 11 - hier des Leuchtengehäuses 31 - anlegt.

In der Ausführungsform der Fig. 3 ist die Dichtung 50 insgesamt massiv ausgebildet. Die Dichtung wird ferner - wie auch der Bauteilkörper 30 - als Extrusionsprofil gefertigt, wobei die Dichtung 50 und der Bauteilkörper 30 gemeinsam ein Extrusionsprofil bilden, das im Co-Extrusionsverfahren hergestellt ist.

Man erkennt mithin, dass das Bauteil 10 mit seinem Bauteilkörper 30 und der Dichtung 50 einen Verbundkörper bildet, der im Co-Extrusionsverfahren hergestellt wird. Dies hat gegenüber dem Stand der Technik den wesentlichen Vorteil, dass die Dichtung 50 an den Bauteilkörper 30 anextrudiert und dabei - ohne jeden zusätzlichen Montageschritt oder Montageaufwand - mit dem ersten Abschnitt 52 in die Ausnehmung 34 eingebracht wird.

Damit reduziert sich der Herstellungsaufwand für das Bauteil 10 auf nur einen Verfahrensschritt, nämlich das Co-Extrudieren von Bauteilkörper 30 und Dichtung 50. Letztere wird während des Extrusionsvorgangs automatisch in der Ausnehmung 34 des Bauteilkörpers 30 festgelegt, wobei der Hinterschnitt 37 und der korrespondierende schwalbenschwanzförmige Querschnitt des ersten Abschnitts 52 der Dichtung 50 für eine formschlüssige und gegebenenfalls sogar für eine kraftschlüssige Verbindung zwischen Dichtung 50 und Bauteilkörper 30 sorgen, was in dieser Form bei einer nachträglichen Montage der Dichtung 50 nicht realisierbar wäre. Insbesondere kann der Hinterschnitt 37 derart dimensioniert werden, dass die Dichtung 50 dauerhaft fest mit dem Bauteilkörper 30 verbunden ist und sich nicht versehentlich daraus lösen kann, was bei den aus dem Stand der Technik bekannten Lösungen nicht möglich ist. Ein weiterer Vorteil des erfindungsgemäßen Bauteils 10 liegt darin, dass für die Festlegung der Dichtung 50 am Bauteilkörper 30 keinerlei Klebstoffe oder sonstigen Hilfsmittel notwendig sind. Auch dadurch reduzieren sich die Herstellkosten für das Bauteil 10.

Um das Bauteil 10 als Leuchtenabdeckung mit dem anderen Bauteil 11, dem Leuchtengehäuse, lösbar verbinden zu können, sind an dem Bauteilkörper 30 des Bauteils 10 parallel zu den Dichtungen 50 Befestigungselemente 40 ausgebildet. Hierbei handelt es sich jeweils um eine sich ebenfalls in Längsrichtung L erstreckende Federleiste, die mit einem federelastischen Schenkel 42 einstückig an der Innenfläche 32 des Bauteilkörpers 30 ausgebildet ist und - in montierter Stellung des Bauteils 10 - mit einer Abkröpfung 44 den jeweils zugeordneten Randbereich 17 des Bauteilkörpers 31 hintergreift, wobei die Abkröpfung 44 kraft- und/oder formschlüssig auf der jeweils zugeordneten Anlagefläche 18 der Randbereiche 17 aufliegt.

Damit das Bauteil 10 rasch und bequem in der Lichtaustrittsöffnung 16 montiert werden kann, sind an jedem Schenkel 42 endseitig Schrägflächen 46 ausgebildet, die Anlaufschrägen bilden und die beim Einsetzen des Bauteils 10 in die Lichtaustrittsöffnung 16 des Bauteils 11 an dessen Randleisten 17 anstoßen und dabei die Schenkel 42 zur Seite biegen, bis die Abkröpfungen 44 die Randleisten 17 hintergreifen und auf den Anlageflächen 18 zum Anliegen kommen.

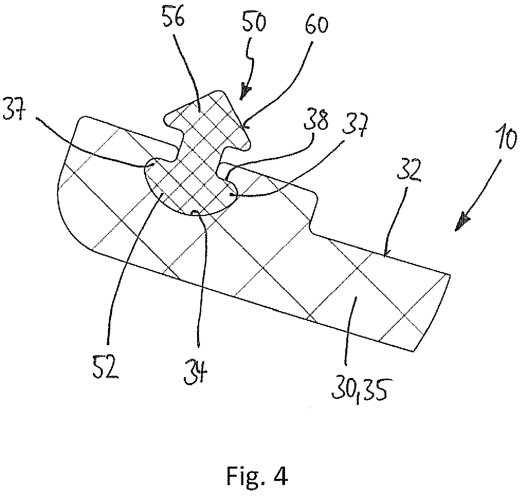

In der Ausführungsform von Fig. 4 ist die Ausnehmung 34 in dem Bauteilkörper 30 im Querschnitt etwa halbkreisförmig gestaltet, wobei die seitlich ausgebildeten Hinterschneidungen 37 eine etwa parallel zur Innenfläche 32 des Bauteilkörpers 30 verlaufende Anlagefläche 38 bilden. Der in die Ausnehmung 34 coextrudierte erste Abschnitt 52 der Dichtung 50 ist im Querschnitt ebenfalls etwa halbkreisförmig gestaltet und liegt formschlüssig in der Ausnehmung 34, insbesondere formschlüssig an den Anlageflächen 38 an, so dass sich eine besonders stabile und hoch belastbare Verbindung zwischen Dichtung 50 und Bauteilkörper 30 ergibt. Die Breite der Ausnehmung 34 ist aufgrund der relativ groß ausgebildeten Hinterschneidungen 37 größer als die Breite des zweiten Abschnitts 65 der Dichtung 50, der in diesem Ausführungsbeispiel im Querschnitt dreieckig ausgebildet ist.

Der zweite Abschnitt 56 der Dichtung 50 hat einen etwa dreieckigen und mithin pfleil- oder pilzförmigen Querschnitt. Dieser legt sich - in montierter Stellung des Bauteils 10 mit seiner Dichtfläche 60 an die Dichtfläche 19 des anderen Bauteils an. Aufgrund seiner Formgebung, kann die Dichtung 50 der Fig. 4 allerdings auch als Rastelement ausgebildet sein, das in eine (nicht gezeigte) korrespondierende Rastnut in der Dichtfläche 19 eingreift, wenn das Bauteil 10 an dem Bauteil 11 montiert wird. Die Rastnut in der Dichtfläche 10 verläuft ebenfalls entlang der Längsrichtung L. Die Rast- oder Befestigungselement 40 können zusätzlich vorgesehen sein. Man kann diese aber auch weglassen, wenn die Dichtung 50 selbst als Rastelement ausgebildet ist.

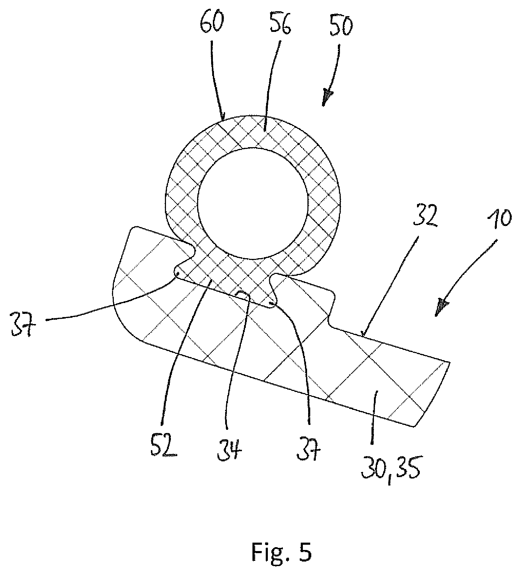

Fig. 5 zeigt eine Dichtung 50, die im ersten Abschnitt 52 im Querschnitt schwalbenschwanzförmig ausgebildet ist und im zweiten Abschnitt 56 einen etwa kreisrunden Querschnitt aufweist. Hinzu kommt, dass die Dichtung 50 im Bereich des zweiten Abschnitts 56 entlang der Längsrichtung L hohl ausgebildet ist. Dadurch ändern sich die Eigenschaften der Dichtung 50, die sich formschlüssig an die Dichtflächen 19 des anderen Bauteils 11 anpassen kann.

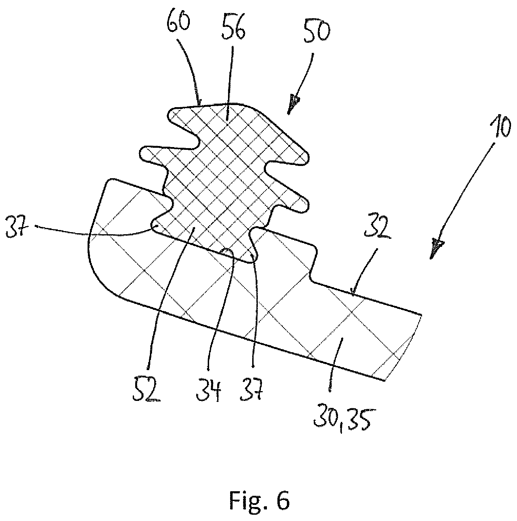

Die Ausführungsform von Fig. 6 sieht für den zweiten Abschnitt 56 der Dichtung 50 einen etwa tannenbaumförmigen Dichtungsquerschnitt vor. Dieses Profil kann - ebenso wie das Dichtprofil der Fig. 4 - bei Bedarf auch als Rastelement für die Verbindung zwischen den Beuteilen 10 und 11 dienen, indem beispielsweise das Bauteil 11 entlang der Randbereiche 17 im Bereich der Stufenflächen 19 mit (gleichfalls nicht gezeigten) Rastnuten versehen ist, in welche die Dichtungsabschnitte 56 zu beiden Seiten der Lichtaustrittsöffnung 16 kraft- und/oder formschlüssig eingreifen. Die seitlichen Lamellen des Dichtungsquerschnitts 56 sorgen dabei für eine sehr gute Dichtwirkung. Zudem kann mit diesen Lamellen ein Reibschluss innerhalb der Rastnut hergestellt werden.

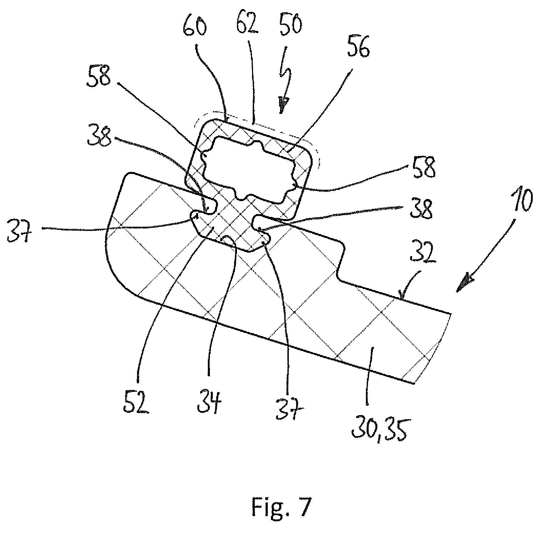

Fig. 7 zeigt eine noch andere Querschnittsform für die Dichtung 50, die mit ihrem ersten Abschnitt 52 in die Ausnehmung 34 des Bauteilkörpers 30 formschlüssig einextrudiert ist und mit ihrem widerhakenförmigen Querschnitt an den Anlageflächen 38 anliegt. Der zweite Abschnitt 56 ist im Querschnitt rechteckig und innen hohl ausgebildet, wobei in Längsrichtung L verlaufende und an der Innenwandung des zweiten Abschnitts 56 ausgebildete Sicken 58 bei Bedarf die Elastizität der Dichtung 50 beeinflussen können. Auf der Dichtfläche 60 der Dichtung 50 kann - wie in Fig. 7 mit einer Strichpunkt-Linie angedeutet - eine Beschichtung 62 aufgebracht sein, beispielsweise eine Beflockung. Eine Beschichtung 62 auf der Dichtfläche 60 kann selbstverständlich auch bei allen anderen erfindungsgemäßen Dichtungen 50 eingesetzt werden.

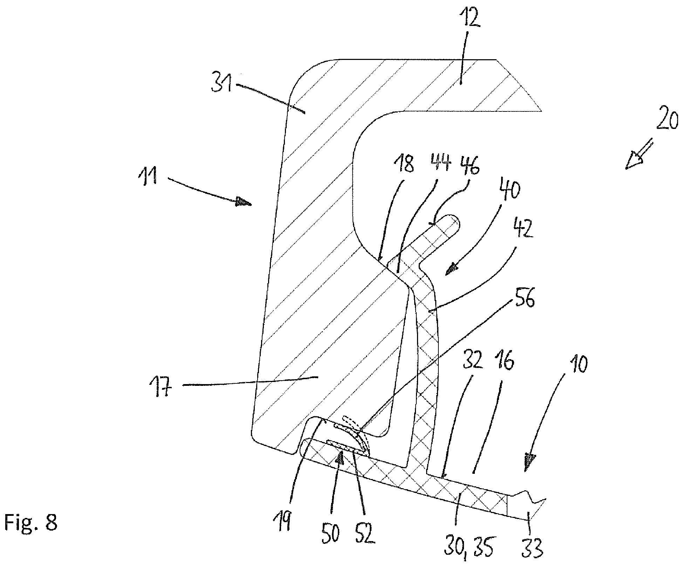

In der Ausführungsform von Fig. 8 ist die Dichtung 50 nicht in eine Ausnehmung 34 im Bauteilkörper 30 einextrudiert, sondern auf der Innenfläche 32 des Bauteilkörpers 30 aufextrudiert. Der erste Abschnitt 52 der Dichtung ist im Querschnitt rechteckig ausgebildet und flächig auf der Innenfläche 32 des Bauteilkörpers 30 aufgebracht. Der zweite Abschnitt 56 der Dichtung ist im Querschnitt sichelförmig ausgebildet. Er schmiegt sich in montierter Stellung des Bauteils 10 dichtend an die Stufenfläche 19 des Randbereichs 17 des Bauteils 11 an.

In Fig. 8 ist das aus den Bauteilen 10, 11 zusammengesetzte Leuchtenprofil nur teilweise dargestellt. Man erkennt aber, dass auch hier die Randbereiche 17 des Bauteilkörpers 30 in einer Richtung senkrecht zur Längsrichtung L die Lichtaustrittsöffnung 16 zu beiden Seiten begrenzen. Allerdings sind die Randbereiche 17 nicht wie in den Ausführungsformen der Fig. 1 bis 7 Teil einer Frontwand 15 des Leuchtenkörpers 30. Die Randbereiche 17 bilden hier als Bestandteil des Bauteils 11 vielmehr eine Seitenwand für die Leuchte 20. Das Bauteil 10 ist über die Rast- bzw. Befestigungselemente 40 lösbar mit dem Bauteil 11 verbindbar. Es verschließt in montierter Stellung die Lichtaustrittsöffnung 16, wobei die Schenkel 42 der Befestigungselemente 40 mit ihren Abkröpfungen 44 die Randbereiche 17 kraftschlüssig hintergreifen und in montierter Stellung auf den Anlageflächen 18 aufliegen.

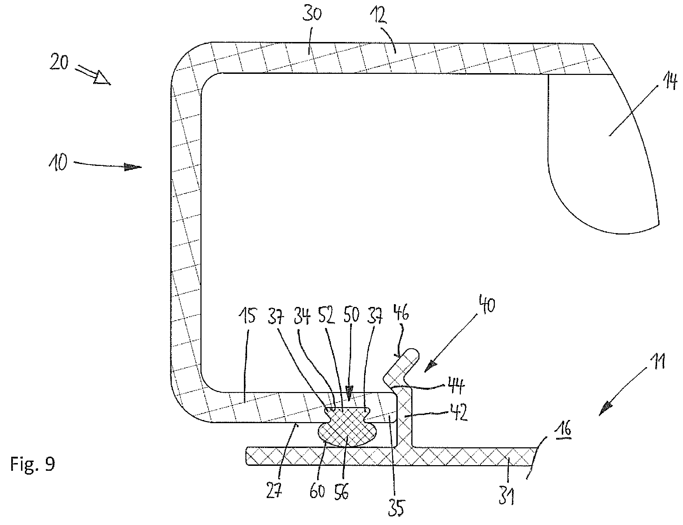

Fig. 9 zeigt eine noch andere Ausführungsform eines Bauteils 10. Dieses hat einen Bauteilkörper 30 und eine Dichtung 50, ist aber hier als Leuchtengehäuse ausgebildet, während das andere Bauteil 11 die Leuchtenabdeckung für die Leuchte 20 bildet. Letztere hat ein im Querschnitt nur teilweise gezeigtes Leuchtenprofil, das von den Bauteilen 10, 11 gebildet wird.

Das Bauteil 10 bildet mit dem Bauteilkörper 30 das Leuchtengehäuse, bevorzugt aus einem lichtundurchlässigen Material. Dieses Gehäuse hat eine Rückwand 12, die für die Montage der Leuchte 20 an einer (nicht gezeigten) Wand oder Decke mit (hier gleichfalls nicht dargestellten) Durchgangslöchern versehen sein kann. Im Inneren des Leuchtengehäuses 30 ist ein Sockel 14 ausgebildet. An diesem werden (gleichfalls nicht dargestellte) Leuchtmittel sowie für den Betrieb der Leuchte 20 notwendige (ebenfalls nicht gezeigte) elektrische Anschlüsse und/oder Schaltgeräte montiert.

Der Rückwand 12 gegenüberliegend weist der Bauteilkörper 30 eine Frontwand 15 auf, die mittig von einer Lichtaustrittsöffnung 16 unterbrochen ist. Letztere wird in montiertem Zustand der Leuchte 20 von dem anderen Bauteil 11, namentlich von dem Bauteilkörper 31 der die Leuchtenabdeckung bildet, verschlossen. Der Bauteilkörper 31 ist hierzu über Rast- und Befestigungselemente 40 mit dem Bauteil 10 verbindbar ist. Der Bauteilkörper 31 des Bauteils 11 ist als Leuchtenabdeckung zumindest teilweise aus lichtdurchlässigen Materialien gefertigt.

Zu beiden Seiten der Lichtaustrittsöffnung 16 weist die Frontwand 15 jeweils einen Randbereich 35 auf, der an seiner Außenfläche 27 mit einer sich in Längsrichtung L erstreckenden Ausnehmung 34 versehen ist. In diese beidseitig mit einem Hinterschnitt 37 versehene, im Querschnitt schwalbenschwanzförmige Ausnehmung 34 ist die Dichtung 50 mit ihrem ebenfalls schwalbenschwanzförmigen ersten Abschnitt 52 formschlüssig einextrudiert, während sich der zweite, im Querschnitt etwa ovale Abschnitt 56 der Dichtung 50 in montierter Stellung des Bauteils 10 an der Innenfläche 32 des anderen Bauteils 11 dichtend anlegt. Die Dichtung 50 kann auch in dieser Ausführungsform eine andere Querschnittsfläche aufweisen, z.B. eine solche, wie sie in den Fig. 4 bis 7 dargestellt sind. Sie kann ferner bei Bedarf auf ihrer Dichtfläche 60 beschichtet sein.

Die Dichtung 50 wird - wie auch der Bauteilkörper 30 - als Extrusionsprofil gefertigt, wobei die Dichtung 50 und der Bauteilkörper 30 gemeinsam ein Extrusionsprofil bilden, das im Co-Extrusionsverfahren hergestellt ist. Damit bildet das Bauteil 10 mit seinem Bauteilkörper 30 und der Dichtung 50 einen Verbundkörper, der im Co-Extrusionsverfahren hergestellt wird. Dies hat gegenüber dem Stand der Technik den wesentlichen Vorteil, dass die Dichtung 50 an den Bauteilkörper 30, der in diesem Ausführungsbeispiel das Leuchtengehäuse darstellt, anextrudiert und dabei - ohne jeden zusätzlichen Montageschritt oder Montageaufwand - mit dem ersten Abschnitt 52 in die Ausnehmung 34 eingebracht wird. Bedingt durch das Co-Extrusionsverfahren sind überdies in Verbindung mit der kraft-, reib- und/oder formschlüssigen Verbindung zwischen Bauteil und Dichtung auch Werkstoffkombinationen möglich, die aufgrund fehlender Verträglichkeit oder Haftung nicht in stoffschlüssige Verbindung miteinander gebracht werden können. Dies eröffnet für die erfindungsgemäßen Bauteile ein sehr breites Anwendungsgebiet.

Die Materialauswahl für das erfindungsgemäße Bauteil 10, insbesondere für den Bauteilkörper 30 und die Dichtung 50, ist vielfältig. So können Bauteilkörper 30, die transparente Leuchtenabdeckungen bilden oder die zumindest transparente Abschnitte 33, 35 aufweisen, aus Polyacrylmethacrylat (PMMA), Polycarbonat (PC), Polystyrol (PS), Celluloseacetobutyrat (CAB) oder mikrokristallinen Polyamiden (PA) wie z.B. Trogamid ®, hergestellt werden.

Bildet der Bauteilkörper 30 des erfindungsgemäßen Bauteils 10 eine transluzente Leuchtenabdeckung oder weist diese zumindest transluzente Abschnitte auf, so können hierfür die oben genannten Materialien mit Zusätzen von Diffusor-Additiven, leichten Einfärbungen oder dgl. verwendet werden.

Bildet das erfindungsgemäße Bauteil 10 ein Leuchtengehäuse oder Teile davon, so werden diese bevorzugt aus den oben genannten Materialien mit gedeckter Einfärbung oder aus Polyethylen (PE), Polypropylen (PP), Polyamiden (PA6, PA6.6, PA11, PA12) oder anderen geeigneten thermoplastisch verarbeitbaren Kunststoffen hergestellt.

Als Material für die Dichtungen 50 kommen grundsätzlich alle thermoplastischen Elastomere (TPE) in Frage, beispielsweise
- thermoplastische Elastomere auf Olefinbasis (TPO bzw. TPE-O), z.B. auf Basis von PP/EPDM
- vernetzte thermoplastische Elastomere auf Olefinbasis (TPV bzw. TPE-V), z.B. auf Basis PP/EPDM
- thermoplastische Elastomere auf Urethanbasis (TPU bzw. TPE-U)
- thermoplastische Copolyester (TPC bzw. TPE-E)
- thermoplastische Styrol-Blockcopolymere (TPS bzw. TPE-S) wie beispielsweise Styrol-Butadien-Styrol (SBS), Styrol-Ethylen/Butylen-Styrol (SEBS), Styrol-Ethylen/Propylen-Styrol (SEPS)
- thermoplastische Elsatomere auf Basis von Copolyamiden (TPE bzw. TPE-A)

Die Erfindung ist nicht auf eine der vorbeschriebenen Ausführungsformen beschränkt, sondern in vielfältiger Weise abwandelbar.

Beispielsweise kann die Dichtung 50 zumindest teilweise geschäumt ausgebildet sein. Auch lassen sich verschiedene Ausführungsformen miteinander kombinieren, indem beispielsweise eine im Querschnitt hohl ausgebildete Dichtung innen ausgeschäumt ist.

Der erste Abschnitt 52 der Dichtung 50 kann in Längsrichtung L anstelle eines schwalbenschwanzförmigen Querschnitts auch andere Querschnitte aufweisen, die formschlüssig in die Hinterschneidungen 37 der Ausnehmungen 34 eingreifen. Derartige Verbindungen können ergänzend oder alternativ auch kraft- oder reibschlüssig ausgebildet sein.

Der zweite Abschnitt 56 der Dichtung 50 kann entlang der Längsrichtung L im Querschnitt auch rund, oval, dreieckig, viereckig, schwalbenschwanz¬förmig, pilzförmig, C-förmig, o.dgl. ausgebildet sein. Ferner besteht die Möglichkeit, das Außenprofil der Dichtfläche 60 an das Flächenprofil der Dichtflächen 19 des jeweils anderen Bauteils 11 anzupassen.

Der Bauteilkörper 30 und die Dichtung 50 werden bevorzugt aus unterschiedlichen Materialien extrudiert, wobei der Bauteilkörper 30 aus einem härteren und die Dichtung 50 aus einem weicheren Material besteht.

Man kann den Bauteilkörper 30 und/oder die Dichtung 50 auch aus zwei oder mehr verschiedenen Materialien extrudieren. Beispielsweise können für den Bauteilkörper 30, insbesondere wenn dieser eine Leuchtenabdeckung bildet, sowohl lichtdurchlässige als auch lichtundurchlässige Materialien verwendet werden. Auch die Dichtung kann aus zwei unterschiedlichen Materialien gefertigt werden.

Der Bauteilkörper 30 und die Dichtung 50 können während des Co-Extrusionsverfahrens auch derart ausgebildet werden, dass die beiden Elemente 30, 50 kraftschlüssig, reibschlüssig oder stoffschlüssig miteinander verbunden sind.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- L: Längsrichtung
- 10: Bauteil
- 11: anderes Bauteil
- 12: Rückwand
- 13: Durchgangsloch
- 14: Sockel
- 15: Frontwand
- 16: Lichtaustrittsöffnung
- 17: Randbereich
- 18: Anlagefläche
- 19: Stufenfläche/Dichtfläche
- 20: Leuchte
- 27: Außenfläche
- 30: Bauteilkörper
- 31: anderer Bauteilkörper
- 32: Innenfläche
- 33: zentraler Bereich
- 34: Ausnehmung
- 35: Randbereich
- 37: Hinterschnitt
- 38: Anlagefläche
- 40: Rast- oder Befestigungselement
- 42: Schenkel
- 44: Abkröpfung
- 46: Schrägfläche
- 50: Dichtung
- 52: erster Abschnitt
- 56: zweiter Abschnitt
- 58: Sicke
- 60: Dichtfläche
- 62: Beschichtung

## Patentansprüche

1. Bauteil (10) für eine aus mehreren Bauteilen (10, 11) bestehende Leuchte (20), wobei das Bauteil (10) mit wenigstens einem anderen Bauteil (11) der Leuchte (20) verbindbar ist,
mit einem Bauteilkörper (30), der eine Längsrichtung (L) aufweist, und mit wenigstens einer an dem Bauteilkörper (30) ausgebildeten Dichtung (50), wobei sich die wenigstens eine Dichtung (50) in Längsrichtung (L) des Bauteilkörpers (30) erstreckt und der Bauteilkörper (30) und die Dichtung (50) gemeinsam ein Extrusionsprofil bilden, das im Co-Extrusionsverfahren hergestellt ist,
wobei die Dichtung (50) entlang der Längsrichtung (L) im Querschnitt einen ersten Abschnitt (52) und einen zweiten Abschnitt (56) aufweist, wobei der erste Abschnitt (52) zur Anbindung der Dichtung (50) an den Bauteilkörper (30) vorgesehen ist, während der zweite Abschnitt (56) zur Abdichtung des Bauteils (10) gegenüber einem anderen Bauteil (11) der Leuchte (20) vorgesehen ist und eine Dichtfläche (60) aufweist,
**dadurch gekennzeichnet, dass** der erste Abschnitt (52) der Dichtung (50) entlang der Längsrichtung (L) in einer Ausnehmung (34) des Bauteilkörpers (30) angeordnet ist.

2. Bauteil nach Anspruch 1, **dadurch gekennzeichnet, dass** der Bauteilkörper (30) und die Dichtung (50) kraftschlüssig, reibschlüssig, formschlüssig und/oder stoffschlüssig miteinander verbunden sind.

3. Bauteil nach Anspruch 1 oder 2, **dadurch gekennzeichnet, dass** die Ausnehmung (34) des Bauteilkörpers (30) entlang der Längsrichtung (L) im Querschnitt mit einem Hinterschnitt (37) und der erste Abschnitt (52) der Dichtung (50) mit einem dazu korrespondierenden Querschnitt versehen ist.

4. Bauteil nach einem der Ansprüche 1 bis 3, **dadurch gekennzeichnet, dass** der Bauteilkörper (30) entlang der Längsrichtung (L) zur Festlegung an dem anderen Bauteil (11) mit einem Rast- oder Befestigungselement (40) versehen ist.

5. Bauteil nach Anspruch 4, **dadurch gekennzeichnet, dass** das Rast- oder Befestigungselement (40) von der Dichtung (50) gebildet ist oder die Dichtung (50) trägt.

6. Bauteil nach einem der Ansprüche 1 bis 5, **dadurch gekennzeichnet, dass** der Bauteilkörper (30) und/oder die Dichtung (50) jeweils aus zwei oder mehr verschiedenen Materialien gefertigt sind.

7. Bauteil nach einem der Ansprüche 1 bis 6, **dadurch gekennzeichnet, dass** der Bauteilkörper (30, 31) ein Leuchtengehäuse oder ein Teil eines Leuchtengehäuses ist.

8. Bauteil nach einem der Ansprüche 1 bis 7, **dadurch gekennzeichnet, dass** der Bauteilkörper (30, 31) eine Leuchtenabdeckung ist.

9. Leuchte (20) mit einem Bauteil (10) gemäß einem der Ansprüche 1 bis 8.

10. Verfahren zum Herstellen eines Bauteils (10) für eine aus mehreren Bauteilen (10, 11) bestehende Leuchte (20), wobei das Bauteil (10) mit wenigstens einem anderen Bauteil (11) der Leuchte (20) verbindbar ist,
mit einem Bauteilkörper (30), der eine Längsrichtung (L) aufweist, und mit wenigstens einer an dem Bauteilkörper (30) ausgebildeten Dichtung (50), wobei sich die wenigstens eine Dichtung (50) in Längsrichtung (L) des Bauteilkörpers (30) erstreckt, wobei die Dichtung (50) entlang der Längsrichtung (L) im Querschnitt einen ersten Abschnitt (52) und einen zweiten Abschnitt (56) aufweist, wobei der erste Abschnitt (52) zur Anbindung der Dichtung (50) an den Bauteilkörper (30) vorgesehen ist, während der zweite Abschnitt (56) zur Abdichtung des Bauteils (10) gegenüber einem anderen Bauteil (11) der Leuchte (20) vorgesehen ist und eine Dichtfläche (60) aufweist und wobei der Bauteilkörper (30) und die Dichtung (50) im Co-Extrusionsverfahren hergestellt werden,
**dadurch gekennzeichnet, dass** der erste Abschnitt (52) der Dichtung (50) entlang der Längsrichtung (L) in einer Ausnehmung (34) des Bauteilkörpers (30) angeordnet wird.

## Claims

1. A component (10) for a lamp (20) consisting of a plurality of components (10, 11), wherein the component (10) can be connected to at least one other component (11) of the lamp (20),
comprising a component body (30) having a longitudinal direction (L) and comprising at least one seal (50) formed on the component body (30), wherein the at least one seal (50) extends in the longitudinal direction (L) of the component body (30) and the component body (30) and the seal together form an extrusion profile that is manufactured using the co-extrusion method,
wherein, in the longitudinal direction (L), the seal (50) has a first section (52) and a second section (56) in cross-section, wherein the first section (52) is provided for connecting the seal (50) to the component body (30), while the second section (56) is provided for sealing the component (10) with respect to another component (11) of the lamp (20) and has a sealing surface (60),
**characterized in that** the first section (52) of the seal (50) is arranged along the longitudinal direction (L) in a recess (34) of the component body (30).

2. The component according to claim 1, **characterized in that** the component body (30) and the seal (50) are connected to one another in a force-fitting, frictionally-engaged, form-fitting and/or firmly-bonded manner.

3. The component according to claim 1 or 2, **characterized in that**, along the longitudinal direction (L), the recess (34) of the component body (30) is provided in cross-section with an undercut (37), and the first section (52) of the seal (50) is provided with a cross-section corresponding thereto.

4. The component according to any one of claims 1 to 3, **characterized in that** the component body (30) is provided along the longitudinal direction (L) with a locking or fastening element (40) for fixing to the other component (11).

5. The component according to claim 4, **characterized in that** the locking or fastening element (40) is formed by the seal (50) or carries the seal (50).

6. The component according to any one of claims 1 to 5, **characterized in that** the component body (30) and/or the seal (50) are each made from two or more different materials.

7. The component according to any one of claims 1 to 6, **characterized in that** the component body (30, 31) is a lamp housing or a part of the lamp housing.

8. The component according to any one of claims 1 to 7, **characterized in that** the component body (30,-31) is a lamp cover.

9. A lamp (20) having a component (10) according to any one of claims 1 to 8.

10. A method for manufacturing a component (10) for a lamp (20) consisting of a plurality of components (10, 11), wherein the component (10) can be connected to at least one other component (11) of the lamp (20),
the component comprising a component body (30) having a longitudinal direction (L) and comprising at least one seal (50) formed on the component body (30), wherein the at least one seal (50) extends in the longitudinal direction (L) of the component body (30), wherein, in the longitudinal direction (L), the seal (50) has a first section (52) and a second section (56) in cross-section, wherein the first section (52) is provided for connecting the seal (50) to the component body (30), while the second section (56) is provided for sealing the component (10) with respect to another component (11) of the lamp (20) and has a sealing surface (60), and wherein the component body (30) and the seal (50) are manufactured using the co-extrusion method,
**characterized in that** the first section (52) of the seal (50) is arranged along the longitudinal direction (L) in a recess (34) of the component body (30).

## Revendications

1. Composant (10) pour un luminaire (20) constitué de plusieurs composants (10, 11), le composant (10) étant susceptible d'être assemblé avec au moins un composant (11) supplémentaire du luminaire (20),
avec un corps (30) de composant qui comporte une direction longitudinale (L) et avec au moins un joint (50) conçu sur le corps (30) de composant, l'au moins un joint (50) s'étendant dans la direction longitudinale (L) du corps (30) de composant et le corps (30) de composant et le joint (50) formant ensemble un profilé d'extrusion qui est fabriqué par procédé de coextrusion,
le long de la direction longitudinale (L), le joint (50) comportant dans la section transversale une première partie (52) et une deuxième partie (56), la première partie (52) étant prévue pour assembler le joint (50) sur le corps (30) de composant, alors que la deuxième partie (56) est prévue pour assurer l'étanchéité du composant (10) par rapport à un autre composant (11) du luminaire (20) et comporte un surface d'étanchéité (60),
**caractérisé en ce que** la première partie (52) du joint (50) est placée le long de la direction longitudinale (L) dans un évidement (34) du corps (30) de composant.

2. Composant selon la revendication 1, **caractérisé en ce que** le corps (30) de composant et le joint (50) sont reliés l'un à l'autre par complémentarité de force, par frottement, par complémentarité de forme et/ou par matière.

3. Composant selon la revendication 1 ou la revendication 2, **caractérisé en ce que** l'évidement (34) du corps (30) de composant est doté dans la section transversale, le long de la direction longitudinale (L) d'une contre-dépouille et la première partie (52) du joint (50) est munie d'une section transversale correspondant à cette dernière.

4. Composant selon l'une quelconque des revendications 1 à 3, **caractérisé en ce que** le long de la direction longitudinale (L), pour la fixation sur l'autre composant (11), le corps (30) de composant est muni d'un élément d'enclenchement ou de fixation (40).

5. Composant selon la revendication 4, **caractérisé en ce que** l'élément d'enclenchement ou de fixation (40) est formé par le joint (50) ou porte le joint (50).

6. Composant selon l'une quelconque des revendications 1 à 5, **caractérisé en ce que** le corps (30) de composant et/ou le joint (50) sont fabriqués chacun en deux ou en plusieurs matières différentes.

7. Composant selon l'une quelconque des revendications 1 à 6, **caractérisé en ce que** le corps (30, 31) de composant est un boîtier de luminaire ou une partie d'un boîtier de luminaire.

8. Composant selon l'une quelconque des revendications 1 à 7, **caractérisé en ce que** le corps (30, 31) de composant est un cache de luminaire.

9. Luminaire (20) avec un composant (10) selon l'une quelconque des revendications 1 à 8.

10. Procédé destiné à fabriquer un composant (10) pour un luminaire (20) constitué d'un ou de plusieurs composants (10, 11), le composant (10) étant susceptible d'être assemblé avec au moins un autre composant (11) du luminaire (20),
avec un corps (30) de composant, qui comporte une direction longitudinale (L) et avec au moins un joint (50) conçu sur le corps (30) de composant,
l'au moins un joint (50) s'étendant dans la direction longitudinale (L) du corps (30) de composant, le long de la direction longitudinale (L), le joint (50) comportant dans la section transversale une première partie (52) et une deuxième partie (56), la première partie (52) étant prévue pour assembler le joint (50) sur le corps (30) de composant, alors que la deuxième partie (56) est prévue pour assurer l'étanchéité du composant (10) par rapport à un autre composant (11) du luminaire (20) et comporte une surface d'étanchéité (60) et le corps (30) de composant et le joint (50) étant fabriqués par procédé de coextrusion,
**caractérisé en ce qu'**on place la première partie (52) du joint (50) le long de la direction longitudinale (L) dans un évidement (34) du corps (30) de composant.
